# EUROPEAN PATENT SPECIFICATION

(11) **EP 1 923 554 B1**
(45) Date of publication and mention of the grant of the patent: **21.06.2017**
(21) Application number: 06797353.7
(22) Date of filing: 04.09.2006
(51) Int. Cl.: F02D 13/02, F01L 1/18, F01L 1/26, F01L 13/00

(54) **ENGINE**
MOTOR
MOTEUR

(30) Priority: 06.09.2005 JP 2005258322
(43) Date of publication of application: 21.05.2008
(73) Proprietor: Yamaha Hatsudoki Kabushiki Kaisha, Iwata-shi, Shizuoka 438-8501 (JP)
(72) Inventor: NOWATARI, Noboru, Shizuoka;4388501 (JP); FUJITA, Hideo, Shizuoka;4388501 (JP)
(74) Representative: Grünecker Patent- und Rechtsanwälte PartG mbB
(86) International application number: PCT/JP2006/317428
(87) International publication number: WO 2007/029632

(56) References cited:
- WO-A1-00/03127
- WO-A1-03/098012
- JP-A- H0 333 410
- JP-A- 02 259 205
- JP-A- 03 033 410
- JP-A- 07 158 426
- JP-A- 07 166 849
- JP-A- H06 200 745
- JP-A- H07 158 426
- JP-A- H07 166 849
- JP-A- 2005 098 279
- JP-A- 2005 264 787
- JP-U- 64 049 638

## Description

### [Field of the Invention]

The present invention relates to an engine, and more particularly to an engine, which can have both purification of exhaust gas and output securement.

### Technical Background

It is common to place a catalyst in an exhaust system of an engine for purifying exhaust gas. It is preferable that this catalyst be disposed as far as possible from an exhaust opening of the engine from a viewpoint of securement of output performance of the engine. On the other hand, it is preferable that the catalyst be disposed as close as possible to the exhaust opening of the engine from a viewpoint of the exhaust gas purification.

The one, which responds to the aforementioned contradictory demands, is disclosed, for example, in Patent Document 1. In this conventional device, a switching valve 12 is provided within an exhaust pipe, and makes an exhaust passage into two systems 10 and 11. A catalyst 14 is placed within an exhaust passage 10, and a catalyst 17 is placed downstream of the another example of such a system is shown in WO-00/03127. [Patent document 1] JP-A-Hei 10-176523

### [Disclosure of the Invention]

### [Problem to be Solved by the Invention]

However, in the foregoing conventional device, a problem may easily arise in functionality and reliability of the switching valve 12 because the switching valve 12 is exposed to hot gas. In addition, there occurs a problem that heat damage measures for a valve control mechanism is difficult. Furthermore, in the foregoing conventional device, due to its structure, there is a problem that the exhaust passages cannot be completely switched.

The object of the present invention is to provide an engine, which can improve exhaust gas purification and engine output.

### [Means for Solving the Problem]

The invention is an engine characterized by including: first and second exhaust valves; first and second exhaust passages, which are opened and closed by the first and the second exhaust valves; a first catalyst disposed in the first exhaust passages; a second catalyst disposed in the second exhaust passages so as to be located upstream of the first catalyst; a variable valve operating mechanism, in which lifting amounts of the first and the second exhaust valves are configured to be variable between approximately zero and maximum; and a lifting amount control unit for controlling lifting amounts of the first and the second exhaust valves by the variable valve operating mechanism so that exhaust gas amounts passing through the second exhaust passages are larger than those passing through the first exhaust passages at least at start-up and that the exhaust gas amounts passing through the first exhaust passages are larger than those passing through the second exhaust passages at least in a range of high-speed rotation and large-load operation after completion of warm-up operation.

The various valve operating mechanism of the present invention includes the one which continuously increases the lifting amounts of the exhaust valves from approximately zero to the maximum, and the one which switches the lifting amounts of the exhaust valves in two steps, three steps, or more.

Also in the present invention, "that the exhaust gas amounts passing through the second exhaust passages are larger than those passing through the first exhaust passages" means that the present invention includes a case that all the exhaust gas passes through the second exhaust passages, and thus that the exhaust gas amounts passing through the first exhaust passages is zero. In addition, "that the exhaust gas amounts passing through the first exhaust passages are larger than those passing through the second exhaust passages" means that the invention includes a case that all the exhaust gas passes through the first exhaust passages, and that the exhaust gas amounts passing through the second exhaust passages are zero.

The invention is characterized in that the variable valve operating mechanism is configured to increase or decrease the lifting amounts of the first and second exhaust valves along with increase and decrease in a control amount of the lifting amount control unit, and that the lifting amount control unit controls the variable valve operating mechanism such that the lifting amounts of the first exhaust valves are approximately zero and that the lifting amounts of the second exhaust valves are maximum at least at start-up, and controls the variable valve operating mechanism such that the lifting amounts of the first exhaust valves are larger than those of the second exhaust valves and that the lifting amounts of the second exhaust valves are approximately zero at least in the range of the high-speed rotation and the larte-load eration after the completion of the warm-up operation.

To make the lifting amounts of the first exhaust valves approximately zero herein means that the present invention includes not only a case in which the lifting amount is made zero, but also includes a case in which an acceptable amount of the exhaust gas from a viewpoint of the exhaust gas property passes through the first catalysts in the first exhaust passages.

The invention 3 is characterized in that the variable valve operating mechanism includes a camshaft disposed in parallel with a crankshaft and rotary-driven by the crankshaft, a rocking member disposed swingable around a pivot shaft in parallel with the camshaft and rotary-driven by the camshaft, a rocker arm disposed swingably around a control shaft in parallel with the camshaft and driving for opening and closing the exhaust valves, and an intermediate member disposed either between the rocker arm and the rocking member or between the camshaft and the rocking member to make swing of the rocking member transmittable to the rocker arm and to make relative positions with respect to the rocking members changeable; and that the lifting amount control unit controls the relative position of the intermediate member with respect to the rocking member such that the lifting amount of the first exhaust valve is approximately zero, and that of the second exhaust valve is approximately maximum at least at start-up, and also controls the relative positions of the intermediate members with respect to the rocking member such that the lifting amount of the first exhaust valve becomes larger than the maximum lifting amount of the second exhaust valve, and that of the second exhaust valve is approximately zero at least in the range of the high-speed rotation and the large-load operation after the completion of the warm-up operation.

The invention is characterized in that the lifting amount control unit controls the variable valve operating mechanism such that the lifting amount of the first exhaust valve increases as the lifting amount of the second exhaust valve decreases along with the warm-up operation proceeding from the start-up, and that an overlapping area where the second and the first exhaust valves lift together can be obtained.

The invention is characterized in that, in the overlapping area, the substantive area of the exhaust passages due to decrease in the lifting amount of the second exhaust valve and increase in the lifting amount of the first exhaust valve is either approximately constant or continuously increasing.

The invention is characterized in that the second catalyst is provided in a cylinder head and is disposed within the second exhaust port constructing a part of the second exhaust passage.

The invention is characterized in that the two first exhaust valves are disposed side-by-side in a camshaft direction, that the one second exhaust valve is disposed between the two first exhaust valves, and that the second exhaust port is disposed between the first exhaust ports, which construct a part of the first exhaust passages, and a cylinder block side connecting surface when seen in the camshaft direction.

The invention is characterized in that the second catalyst is placed within the second exhaust pipe, which is connected to the second exhaust port of the cylinder head and constructs a part of the second exhaust passages.

### [Effect of the Invention]

According to the invention, the exhaust passages are made into two systems of the first and second exhaust passages, and the second catalysts are disposed in the second exhaust ports to be closer to the engine than the first catalysts of the first exhaust passages. Because it is designed that the exhaust gas amounts passing through the second exhaust passages are larger than those passing through the first exhaust passages at least at start-up, the temperature of the second catalysts disposed near the engine rises to an activation temperature in a short time, and the exhaust gas purification can be surely conducted at start-up of the engine when the property of the exhaust gas tends to worsen.

In the range of the high-speed rotation and the large-load operation, the exhaust gas hardly flows through the second exhaust passages having the second catalyst, which are disposed proximally to the engine, but most of the exhaust gas flows through the first exhaust passages. The first catalysts disposed in the first exhaust passages are placed in positions adequately separated from the engine; therefore, it is possible to increase air-intake by sufficiently utilizing exhaust pulsation in the first exhaust passages, and to improve the engine output compared to a case where the first catalysts are disposed adjacent to the engine. In addition, because the amounts of the exhaust gas passing through the second catalysts, which are disposed proximally to the engine, are controlled in the range of the large-load operation, it is possible to protect the second catalysts against heat damages from the hot gas.

According to the invention at start-up, the lifting amount of the first exhaust valve becomes approximately zero, and the lifting amount of the second exhaust valve becomes approximately the maximum; therefore, the exhaust gas purification can surely be conducted at start-up of the engine by raising the second catalyst to the activation temperature in a short time at start-up of the engine. Also in the range of high-speed rotation and the large-load operation, because the lifting amount of the first exhaust valve becomes the maximum, and also because the lifting amount of the second exhaust valve becomes approximately zero, it is possible to increase air-intake by sufficiently utilizing the exhaust pulsation in the first exhaust passages, and to improve the engine output compared to the case where the first catalyst is disposed adjacent to the engine.

According to the invention the rocking member swings along with rotation of the camshaft, and swing of the rocking member makes the intermediate member swing, and the swing of the intermediate member drives for opening and closing the exhaust valve via the rocker arm. At this time, the lifting amount of the exhaust valve can be freely changed by changing the relative position of the intermediate member with respect to the rocking member. In this way it is possible to provide the practical variable valve operating mechanism with which the lifting amount of the first exhaust valve is set approximately zero at start-up while those of the second exhaust valve is set about the maximum, and with which the lifting amount of the first exhaust valve is set maximum in the high-speed rotation and the large-load operation while that of the second exhaust valve is set zero.

According to the invention it is continuously performed the decrease in the area of the exhaust passage due to the decrease in the lifting amount of the second exhaust valve and the increase in the area of the exhaust passage due to the increase in the lifting amount of the first exhaust valve. Consequently, there is no rapid change in the substantive area of the exhaust passage. Therefore, flowing amount can be continuously switched from the second exhaust valve to the first exhaust valve, combustion changes are slight, and switching shock can be suppressed. As a result, a complicated control system for shock absorption is not needed.

According to the invention because the second catalyst is disposed within the second exhaust port, which is provided in the cylinder head, it is possible to dispose the second catalysts in proximity to the exhaust port of the engine without complicating the structure of the exhaust system.

According to the invention, the two first exhaust valve is disposed side-by-side in the camshaft direction, and the one second exhaust valve is disposed between the two first exhaust valves disposed parallel to one another in the camshaft direction. The second exhaust port is formed to be disposed between the first exhaust port and the cylinder block side connecting surface when seen in the camshaft direction. Therefore, the second exhaust port can be formed by effectively utilizing an empty space in the cylinder head, and the second catalyst can be disposed proximally to the exhaust port.

According to the invention, the second exhaust ports in the cylinder head can have simple structure because the second catalyst is disposed in the second exhaust pipe connected to the cylinder head.

### [Brief Description of Drawings]

FIG. 1 is a cross-sectional side view of a variable valve operating mechanism portion of an engine according to an embodiment of the present invention.
Fig. 2 is a bottom view of a cylinder head of the engine seen from a part side connecting surface;
FIG. 3 is a front view of an outlet portion of an exhaust port of the engine.
FIG. 4 is a perspective view of an exhaust-side variable valve operating mechanism of the engine.
FIG. 5 is a cross-sectional side view of the exhaust-side variable valve operating mechanism.
FIG. 6 is a perspective view of the exhaust-side variable valve operating mechanism.
FIG. 7 is a cross-sectional side view of the exhaust-side variable valve operating mechanism.
FIG. 8 is a plan view of a control shaft of the exhaust-side valve operating mechanism.
FIG. 9 is a perspective view of a rocker arm and an intermediate arm of the exhaust-side valve operating mechanism.
FIG. 10 is a perspective view of the control shaft and the intermediate arm.
FIG. 11 is a perspective view of the control shaft.
FIG. 12 is a schematic plan view showing an exhaust system of the engine.
FIG. 13 is a characteristic chart showing a relationship between an angle of the control shaft and a maximum lifting amount of the valve operating mechanism.
FIG. 14 is a schematic plan view showing a variation of the exhaust system of the engine.
FIG. 15 is a schematic plan view showing another variation of the exhaust system of the engine.

### [Description of Reference Numerals and Symbols]

1: cylinder head
1b: cylinder block side connecting surface
1i: main exhaust port (first exhaust port)
1k: sub exhaust port (first exhaust port)
3a: first exhaust passage
3b: second exhaust passage
5: main catalyst (first catalyst)
6: sub catalyst (second catalyst)
8: main exhaust valve (first exhaust valve)
9: sub exhaust valve (second exhaust valve)
11: exhaust side of variable valve operating mechanism
11a: lifting amount controlling section
16: camshaft
17: rocking member
18: 18'rocker arm
19: 19'intermediate arm (intermediate arm)
20: pivot shaft
23: control shaft

### [Best Mode for Carrying Out the Invention]

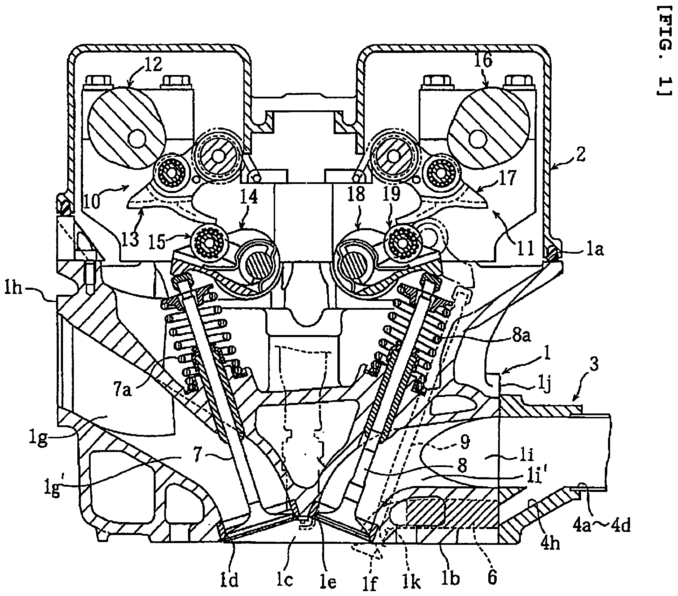

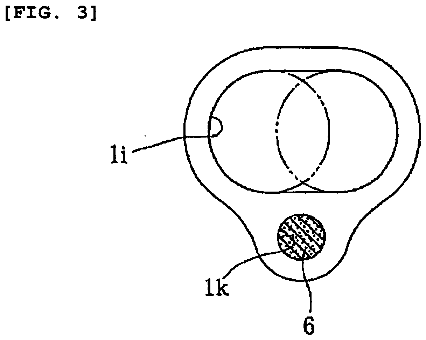

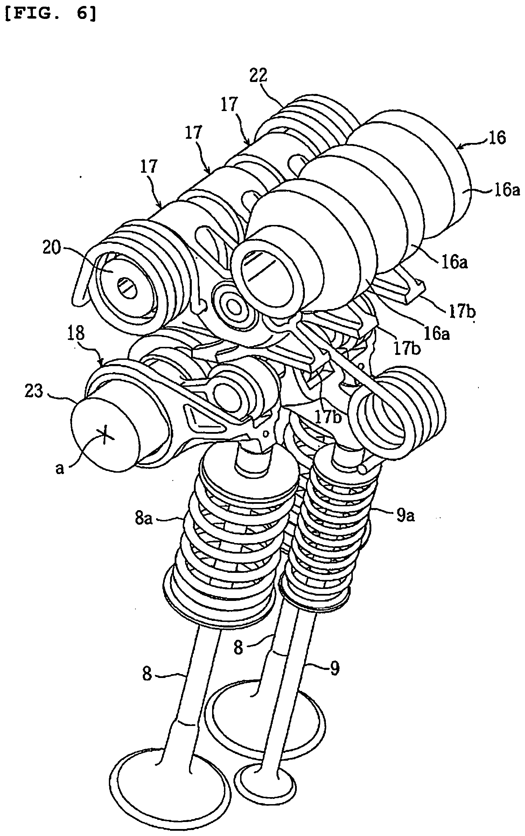

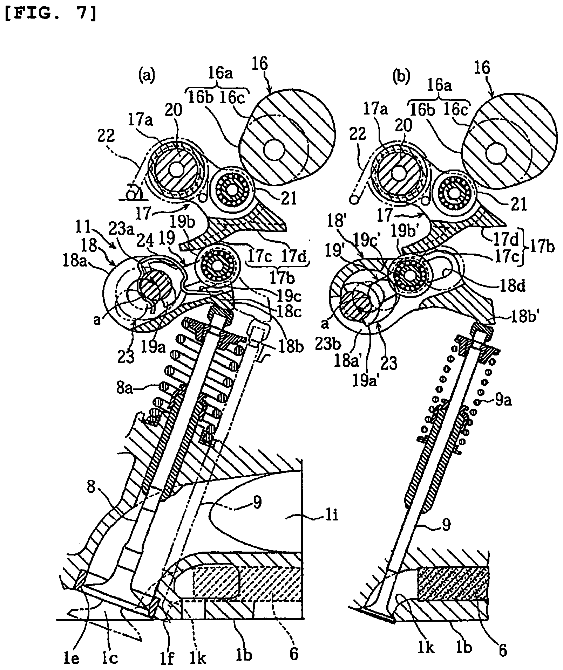

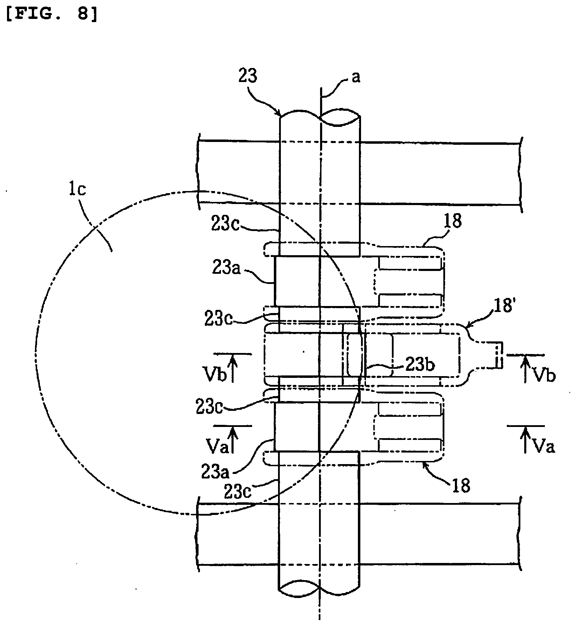

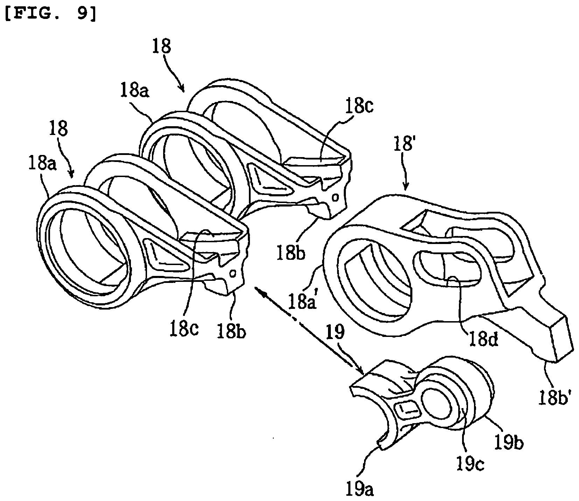

An embodiment of the present invention will be hereinafter described with reference to the accompanying drawings. FIGs. 1 to 13 are drawings for describing an embodiment of the present invention. In the drawings, reference numeral 1 denotes a cylinder head of a water-cooled, four-stroke, transverse-mounted, four-cylinder engine, and reference numeral 2 denotes a head cover mounted to be removable on an upper side connecting surface 1a of the cylinder head 1. A variable valve operating mechanism, which characterizes this embodiment, is disposed in a head of the engine, which consists of the head covers 2 and the cylinder heads 1.

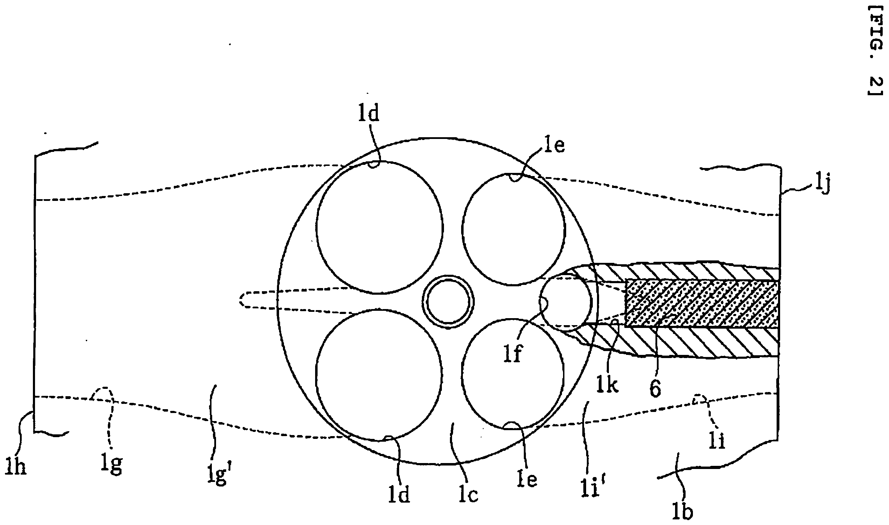

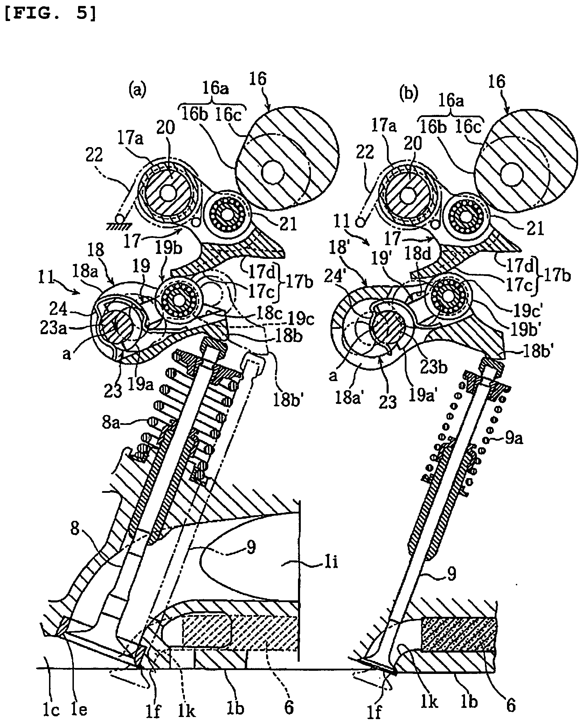

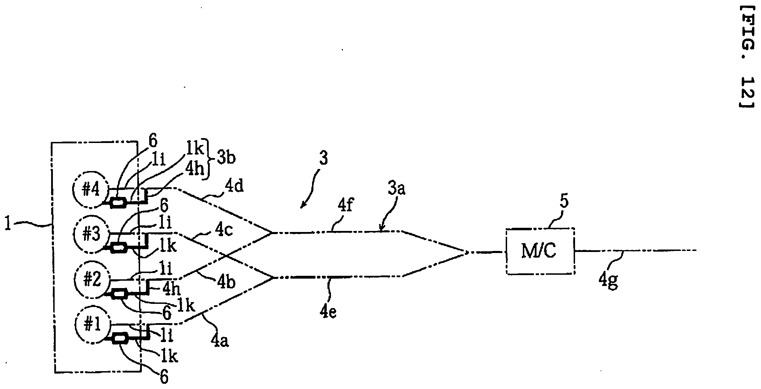

Four combustion chambers 1c are provided in an open manner on lower side connecting surfaces 1b of the cylinder heads 1 so as to correspond with a first to fourth cylinders #1 to #4 (see FIG. 12) placed in parallel with a crankshaft direction (perpendicular direction of FIG. 1 on paper). In each of the combustion chambers 1c, two inlet openings 1d, 1d and two main exhaust openings 1e, 1e are respectively disposed per cylinder in parallel with the crankshaft direction and open into the combustion chamber. Also, one sub exhaust opening 1f opens between the main exhaust openings 1e, 1e. The sub exhaust opening 1f is, as shown in FIG. 2, located between the main exhaust openings 1e and 1e and on a peripheral edge of the combustion chamber 1c, and is also located farther away from a cylindrical axis line than the main exhaust openings 1e when seen in the crankshaft direction in FIG. 5.

The two inlet openings 1d, 1d are introduced from one vertical wall 1h of the cylinder head 1 and are provided in a Siamese inlet port 1g, which diverges into two ports 1g' in the middle. In addition, the two main exhaust openings 1e, 1e are derived from the other vertical wall 1j by a Siamese main exhaust port 1i (hereinafter simply referred to as the main port), which also diverges into two ports 1i' in the middle. By the way, the intake port 1g and the main exhaust port 1i can be a port, which is not a Siamese type but an independent type per intake opening and per exhaust opening.

Furthermore, the sub exhaust opening 1f is derived lower than the main exhaust port 1i of the vertical wall 1j by a sub exhaust port 1k formed to pass through between the main exhaust port 1i and the lower side connecting surface 1b.

An exhaust device 3 is connected to the main exhaust port 1i (see FIG. 12). The exhaust device 3 is a so-called 4-2-1 exhaust system, and has: four first to fourth exhaust pipes 4a to 4d connected to the main ports 1i of the first to fourth cylinder #1 to #4; two first and second merging pipes 4e, 4f, into which the first and the third exhaust pipes 4a, 4c, and the second and the fourth exhaust pipes 4b, 4d respectively merge; and one main pipe 4g, into which the first and second merging pipes 4e, 4f merge.

Then, each of the sub exhaust ports 1k of each of the cylinders merges near at a junction of the first to fourth exhaust pipes 4a to 4d with the main exhaust port 1i via a sub exhaust pipe 4h.

Amain catalyst 5 and a sub catalyst 6 are respectively disposed in the main pipe 4g and each of the sub exhaust ports 1k. The main catalyst 5 is placed in the main pipe 4g into which all the exhaust pipes of the exhaust device 3 merge. The placing position of the main catalyst 5 is set in a downstream side, which is adequately separated from the exhaust openings in order to increase air-intake by utilizing exhaust pulsation. Meanwhile, the sub catalyst 6 is placed within the sub exhaust port 1k in the cylinder head 1. The placing position of the sub catalyst 6 is set in a position, which is so close to the exhaust port that the temperature of the catalyst rises to activation temperature by heat of exhaust gas in an extremely short time.

In this embodiment, a main exhaust passage (first exhaust passage) 3a includes: the main exhaust ports 1i; the first to fourth exhaust pipes 4a to 4d; the first and second merging pipes 4e, 4f; and the main pipe 4g, and the main catalyst 5 is a first catalyst of the present invention. Also, a sub exhaust passage (second exhaust passage) 3b includes the sub exhaust ports 1k and the sub exhaust pipes 4h, and the sub catalyst 6 is a second catalyst of the invention.

Inlet valves 7,7 are disposed in the inlet openings 1d, 1d to make the inlet openings openable and closable. Each of the inlet valves 7 is urged in a closing direction by an inlet valve spring 7a. Also, main exhaust valves (first exhaust valves) 8,8 are disposed in the main exhaust openings 1e, 1e to make the exhaust openings openable and closable. Each of the main exhaust valves 8 is urged in the closing direction by a main exhaust valve spring 8a. Furthermore, a sub exhaust valve (second exhaust valve) 9 is disposed in the sub exhaust opening 1f to make the exhaust opening openable and closable. The sub exhaust valve 9 is urged in the closing direction by a sub exhaust valve spring 9a.

The intake valves 7 are driven open and close by an intake-side variable valve operating mechanism 10, and the main and sub exhaust valves 8, 9 are driven open and close by an exhaust-side variable valve operating mechanism 11. The intake-side variable valve operating mechanism 10 and the exhaust-side variable valve operating mechanism 11 are configured such that a lifting amount and an opening period of each valve are continuously changeable from zero to a maximum value.

The intake-side variable valve operating mechanism 10 includes an intake camshaft 12, an intake rocking members 13, an intake rocker arm 14, and an intake intermediate arm (intermediate member) 15. The exhaust-side variable valve operating system 11 includes an exhaust camshaft 16, an exhaust rocking members 17, main and sub exhaust rocker arms 18, 18', and main and sub exhaust intermediate arms (intermediate members) 19, 19'. The intake and exhaust-side variable valve operating mechanisms 10, 11 have basically the same structure; therefore, hereinafter, the detailed structure will be described mainly with reference to the exhaust-side variable valve operating mechanism 11.

The exhaust camshaft 16 is supported in parallel with a crankshaft (not shown) by the cylinder head 1, and is rotary-driven by the crankshaft via a timing belt(not shown). The exhaust camshaft 16 includes three cam noses 16a per cylinder, and each of the cam noses 16a has a base circular section 16b and a lifting section 16c.

The exhaust rocking members 17 are disposed two for the main exhaust valves 8 and one for the sub exhaust valve 9, and thus, are disposed three per cylinder. Each of the exhaust rocking members 17 is arm-shaped, and a ring 17a in a base side is supported swingably in the cylinder head 1 by a pivot shaft 20, which is located in parallel with the camshaft 16. Also, a cam surface 17b is formed at a tip of the exhaust rocking member 17, and a rocking roller 21 is supported for rotation between the cam surface 17b and the ring 17a.

The cam surface 17b includes a base 17c and a lifting section 17d. The base 17c is formed so as to make an arc around an axial line of the pivot shaft 20 and thus to maintain the lifting amount in zero. Also, the lifting section 17d is formed such that it is connected with the base 17c and that a lifting amount becomes larger as the lifting section 17d moves away from the base 17c.

The rocking roller 21 contacts the cam noses 16a of the exhaust camshaft 16. The rocking members 17 are urged in a counterclockwise direction of FIG. 5 by an urging spring 22 such that the rocking roller 21 constantly contacts with the cam noses 16a.

The main rocker arms 18 for the main exhaust valves 8 are provided two per cylinder, and the sub rocker arms 18' for the sub exhaust valves 9 are provided one per cylinder. Each of the rocker arms 18, 18' are supported swingably by a support part 23c of a shared control shaft 23 by which rings 18a, 18a' in base sides of the rocker arms 18, 18a are also supported for turning in parallel with the camshaft in the cylinder head 1. A pressing part 18b, 18b' formed at a tip of each of the rocker arms 18, 18' contact upper end surfaces of the main and sub exhaust valves 8, 9 via a pad. Because the sub exhaust valve 9 is located so as to separate more outwardly from the cylindrical axial line than the main exhaust valves 9 as described above, the sub rocker arm 18' is formed longer than the main rocker arms 18.

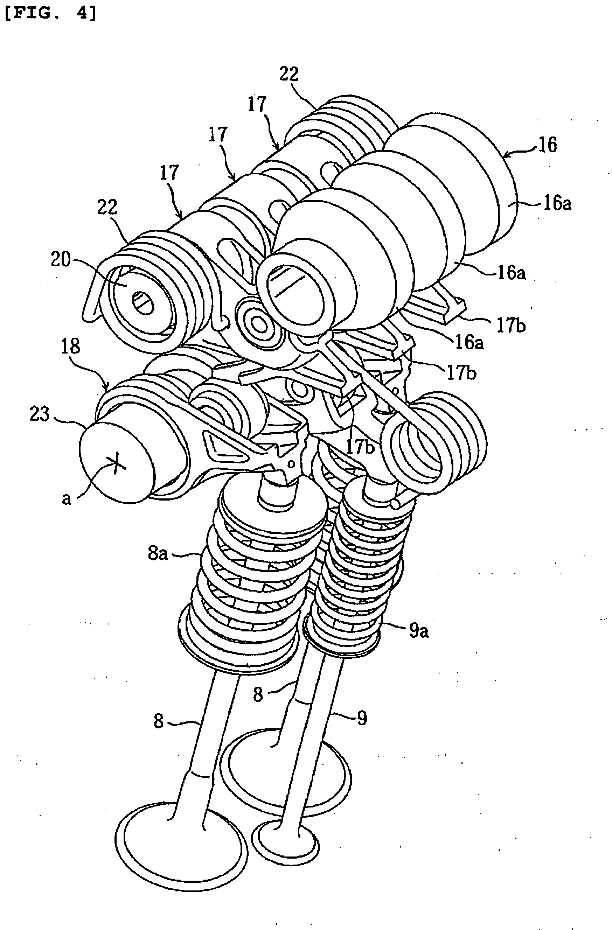

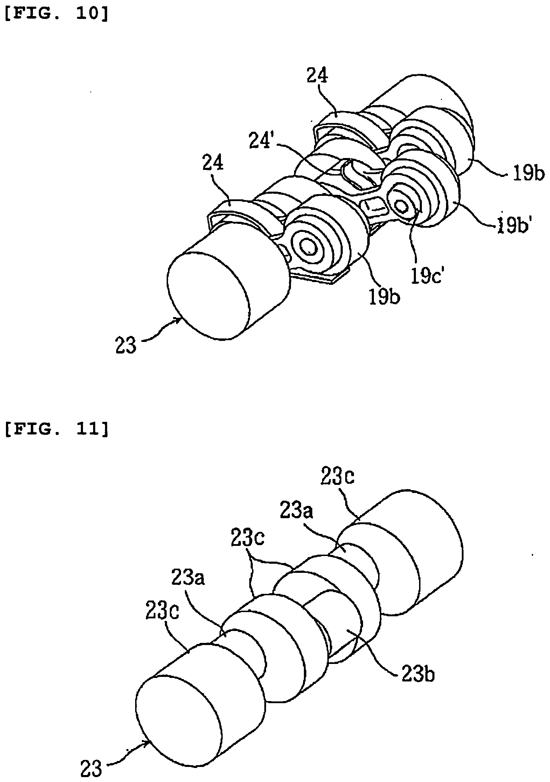

The control shaft 23 is, as shown in FIG. 4 and FIG. 11, formed so as to be concentric with an axial line "a" and be divided into four portions, and has support parts 23c for supporting the rocker arms 18, 18'; main eccentric pins 23a, 23a eccentrically-disposed to a periphery side from the axial line "a" between the support parts 23c; and a sub eccentric pin 23b disposed between both of the main eccentric pins 23a, 23a, and eccentrically installed on the opposite side of the main eccentric pins 23a across the axial line "a".

Bases 19a, 19a' of the main and sub intermediate arms 19, 19' are supported swingably by the main and sub eccentric pins 23a, 23b. The bases 19a, 19a' are in a semicircular pattern and are attachable to the eccentric pins 23a, 23b inwardly in a radial direction from outside. The bases 19a, 19a' are supported by the eccentric pins 23a, 23b and retained by holding springs 24, 24' made up of leaf springs. Thereby, the intermediate arms 19, 19' are capable of swinging around the eccentric pins.

In addition, pressing surfaces 19c formed in boss parts, which rotatably support rollers 19b of the main intermediate arms 19, are slidingly connected with pressed tiers 18c formed in the main rocker arms 18. Furthermore, a pin 19c' , which rotatably supports a roller 19b' of the sub intermediate arm 19', is formed to be elongate in the axial direction so as to project further from a boss part of the intermediate arm 19', and the projections are inserted to be slidable into guiding long holes 18d formed on the sub rocker arm 18'. Thereby, the main and sub intermediate arms 19, 19' and the main and sub rocker arms 18, 18' swing along with swinging of the rocking members 17, and drive for opening and closing the main and sub exhaust valves 8, 9.

An actuator such as a servomotor is connected to one end of the control shaft 23, and a rotational angle of the control shaft 23 is controlled by a controller (lifting amount control unit) via an actuator.

The relative locations of the intermediate arms 19, 19' with respect to the cam surfaces 17b of the rocking members 17 change in response to the rotational angle of the control shaft 23. Thereby, the lifting amount is variably controlled. More specifically, as the rollers 19b of the intermediate arms proceed to the lifting sections 17d of the cam surfaces 17b, the lifting amount increases. On the contrary, as the rollers 19b withdraw to the bases 17c, the lifting amount decreases.

In the engine of this embodiment, when the camshafts 16 rotate, the rocking members 17 swing around the pivot shafts 20 by the cam noses 16a, and the cam surfaces 17b of the rocking members 17 drive for opening and closing the main and sub exhaust valves 8, 9 via the main and sub intermediate arms 19, 19' and the main and sub rocker arms 18, 18'. In this case, the lifting amounts and the opening periods of the main and sub exhaust valves 8, 9 are continuously controlled by controlling the rotational angle of the control shaft 23 with the controller as described above. By the way, it is also the same for the intake valve side.

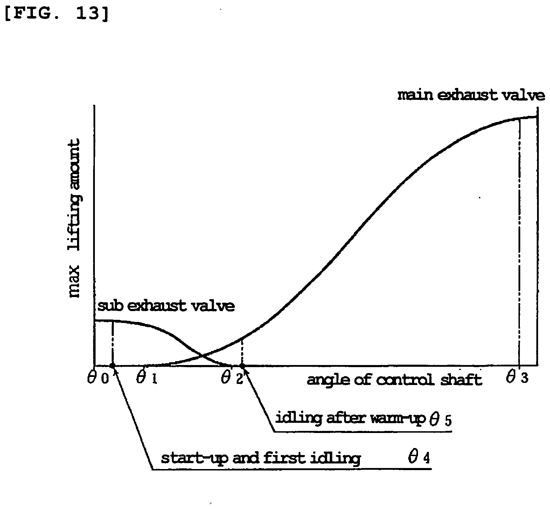

For example, as shown in FIG. 5(a), if the rotational angle of the control shaft 23 is controlled from θ0 to θ1 (see FIG. 13) so that the main intermediate arms 19 are positioned near the back ends, which are farthest from the rocking members 17, the rollers 19b of the main intermediate arms 19 come to contact with rear ends of the base 17c of the cam surfaces 17b of the rocking members 17. Therefore, the main intermediate arms 19 and the main rocker arms 18 do not swing even when the rocking members 17 swing by the rotation of the camshafts 16. As a result, valve lift amounts of the main exhaust valves 8 remain zero.

On the other hand, in the aforementioned state, the sub intermediate arm 19' is positioned near the proceeding end, which is the closest to the rocking member 17. Therefore, the roller 19a' of the sub intermediate arm 19' contacts a vicinity of a border between the lifting section 17d and the base 17c of the cam surface 17a. Accordingly, the sub intermediate arm 19' and the sub rocker arm 18' swing wildly when the rocking member 17 swings by the rotation of the camshaft 16. As a result, the valve lift amount of the sub exhaust valve 9 becomes approximately the maximum.

The lifting amount of the sub exhaust valve 9 gradually decreases as the rotational angle of the control shaft 23 increases to be greater than θ1, and becomes zero when the rotational angle becomes θ2. On the other hand, the lifting amounts of the main exhaust valves 8 increase as the rotational angle of the control shaft 23 increase to be greater than θ1, and reaches approximately the maximum when the rotational shaft becomes θ3.

In the engine 1 of this embodiment, the rotational angle of the control shaft 23 is set at θ4 at start-up and in a first idling period before warm-up. Thereby, the valve lift amounts of the main exhaust valves 8 become zero, and those of the sub exhaust valves 9 become approximately the maximum. Therefore, the exhaust gas is discharged to the outside from the sub exhaust openings 1f through the sub exhaust ports 1k and the sub catalysts 6.

Because the sub catalysts 6 are disposed in the vicinity of the engine combustion chambers 1c as described above, the exhaust gas at high temperature, which is produced within the combustion chambers 1c, is supplied to the catalysts 6 hardly without any decrease in temperature. Thereby, the temperature of the sub catalysts 6 reaches the activation temperature immediately after the engine start-up, and the purification of the exhaust gas by the sub catalysts 6 is steadily executed soon after the engine start-up. As a result, the purification performance for the exhaust gas in a case of the low engine temperature at the engine start-up or in the period of the first idling can be improved.

On the other hand, after completion of the warm-up operation of the engine, the rotational angle of the control shafts 23 is controlled, for example, at θ5 in the idling operating state, and also is controlled at the maximum angle θ3 side in accordance with the engine operating state, for example, as the engine operating state gets close to the region of the high-speed rotation and large-load operation. Thereby, the sub exhaust valves 9 are retained in a full-closed state, and the exhaust gas is discharged to the outside from the main exhaust openings through each of the exhaust pipes 4a to 4d, each of the merging pipes 4e, 4f, the main pipe 4g, and further the main catalyst 5. In this case, because the main catalyst 5 reaches the activation temperature due to the warm-up operation, the purification of the exhaust gas can be steadily executed.

Because the valve lift amounts of the sub exhaust valves 9 are set zero after the warm-up operation, and because only the valve lift amounts of the main exhaust valves 8 are controlled in accordance with the engine operating state, the output can be improved in comparison with a case in which the main catalyst 5 is provided in the proximity of the engine. That is, because the main catalyst 5 is located in a position that is distant enough from the exhaust openings to increase the air-inlet of each cylinder by utilizing the exhaust pulsation, it does not stand in a way when utilizing the exhaust pulsation.

Also, because the exhaust gas does not flow into the sub catalysts 6 in the range of high-speed rotation and large-load operation, there is no chance that the sub catalysts 6 receive the heat damage.

In addition, in this embodiment, because a pathway in which the exhaust gas flows can be switched by utilizing the movement of the variable valve operating mechanism 11, which is configured to be able to freely change the lifting amounts of the main and sub exhaust valves 8, 9 from zero to the maximum, by changing the relative locations of the intermediate arms 19, 19' with respect to the rocking members 17, it is possible to avoid troubles such as one in a conventional device provided with switching valves in the exhaust passages, that is, a difficulty of setting up heat damage measures for a low-functioning, low-trustworthy valve control mechanism due to exposing of the switching valves to hot gas. Also, in the conventional device, there is a structural problem that the exhaust passages cannot be completely switched; however, the complete switching of the exhaust passages is possible in this embodiment because this embodiment utilizes the exhaust valves normally disposed in the exhaust ports, and controls the lifting amounts of the exhaust valves to be zero.

Moreover, in this embodiment, because the sub catalysts 6 are located within the sub exhaust ports 1k provided in the cylinder head 1, the sub catalysts 6 can be located in proximity of the exhaust opening of the engine without complicating the structure of the exhaust system.

Furthermore, because the sub exhaust ports 1k, which dispose the sub catalysts 6, are formed to be positioned between the main exhaust ports 1i and the cylinder block side connection surfaces 1b when seen in the camshaft direction, the sub catalysts 6 can be placed by effectively utilizing an open space in the cylinder heads 1.

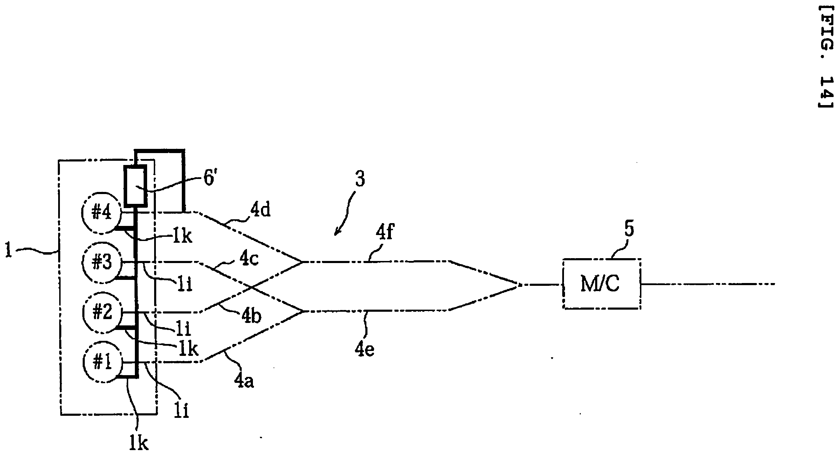

Here, in the above embodiment, the sub catalyst 6 is installed per cylinder #1 to #4 in the cylinder head 1; however, various alternative examples are adoptable in terms of placement of the sub catalyst 6 in the present invention. For example, as shown in FIG. 14, the four sub exhaust ports 1k may be merged into one (or more) port within the cylinder head, and one (or more) sub catalyst 6' may be disposed in the merging part.

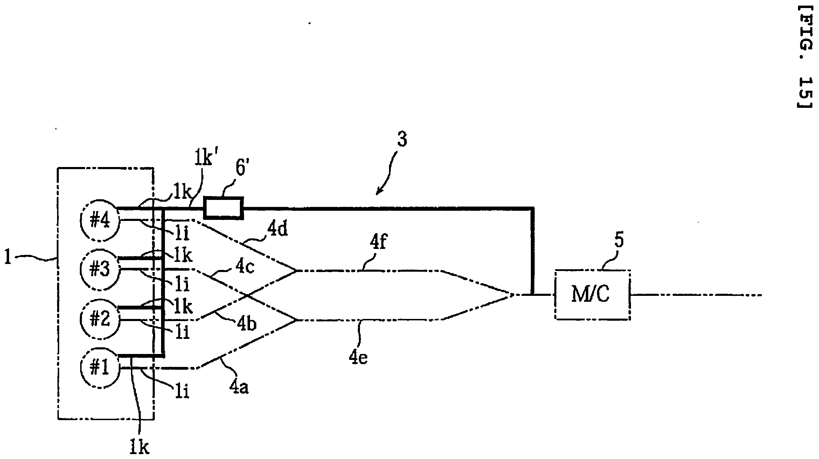

Although the sub catalysts are installed in the cylinder head, the sub catalysts of the present invention do not necessarily be installed in the cylinder head. What matters is to place the sub catalyst as close as possible to the exhaust ports so that it can rise to the activation temperature in a short time. For example, as shown in FIG. 15, the sub catalysts 6' may be disposed in the second exhaust pipes 1k' connected to the second exhaust ports 1k.

## Claims

1. Engine comprising:
first and second exhaust valves (8, 9) opened and closed by a camshaft (16);
first and second exhaust passages (3a, 3b) opened and closed by the first and second exhaust valves (8, 9);
a first catalyst (5) disposed in the first exhaust passage (3a);
a second catalyst (6) installed in the second exhaust passage (3b) so as to be located upstream of the first catalyst (5);
a first and second variable valve operating mechanism (11), in which maximum lifting amounts of first and second exhaust valves (8, 9) are configured to be continuously variable between approximately zero and maximum; and
a lifting amount control unit (11 a) configured to control maximum lifting amounts of the first and second exhaust valves (8, 9) by the first and second variable valve operating mechanism (11);
wherein the first and second variable valve operating mechanism (11) includes:
first and second rocking members (17) swingably supported by a common pivot shaft (20) disposed in parallel with the camshaft (16) and rotary-driven by the camshaft (16);
first and second rocker arms (18, 18') swingably supported by a common control shaft (23) disposed in parallel with the camshaft (16) for driving opening and closing the first and second exhaust valves (8, 9);
first and second eccentric pins (23a, 23b) disposed on opposite sides from each other across an axial line (a) of the common control shaft (23); and
first and second intermediate members (19, 19') disposed between the first and second rocker arms (18, 18') and the first and second rocking members (17) and swingably supported by the first and second eccentric pins (23a, 23b) to make swing of the first and second rocking members (17) transmittable to the first and second rocker arms (18, 18'); and
wherein the lifting amount control unit (11 a) is configured to control a relative position of the first and second intermediate members (19, 19') with respect to the first and second rocking members (17) by the common control shaft (23) such that a maximum lifting amount of the first exhaust valve (8) becomes approximately zero and a maximum lifting amount of the second exhaust valve (9) becomes approximately maximum at least at start-up, and that the maximum lifting amount of the first exhaust valve (8) becomes larger than the maximum lifting amount of the second exhaust valve (9) and a maximum lifting amount of the second exhaust valve (9) becomes approximately zero in a range of the high-speed rotation and large-load operation after completion of warm-up operation.

2. Engine according to claim 1, wherein the lifting amount control unit (11a) is configured to control the variable valve operating mechanism (11) such that a maximum lifting amount of the first exhaust valve (8) increases as a maximum lifting amount of the second exhaust valve (9) decreases along with the warm-up operation proceeding from the start-up, and that an overlapping area where the second exhaust valve (9) and the first exhaust valve (8) lift together can be obtained.

3. Engine according to claim 2, wherein, in the overlapping area, a substantive area of exhaust passages (3a, 3b) either remain approximately constant or continuously increase due to decrease in a maximum lifting amount of the second exhaust valve (9) and increase in a maximum lifting amount of the first exhaust valve (8).

4. Engine according to one of claims 1 to 3, wherein the second catalyst (6) is provided in a cylinder head (1) and is disposed within a second exhaust port (1k), which constructs a part of a second exhaust passage (3b).

5. Engine according to claim 5, wherein two first exhaust valves (8) are provided and are disposed side-by-side in a camshaft direction, wherein one second exhaust valve (9) is provided and is disposed between the two first exhaust valves (8), and wherein the second exhaust port (1k) is disposed to be positioned between the first exhaust ports (1i), which constructs a part of the first exhaust passages (3a) and a cylinder block side connecting surface (1 b).

6. Engine according to one of claims 1 to 4, wherein the second catalyst (6) is placed within a second exhaust pipe (4h), which is connected to a second exhaust port (1k) of a cylinder head (1) and constructs a part of a second exhaust passage (3b).

## Patentansprüche

1. Motor, der umfasst:
ein erstes und ein zweites Auslassventil (8, 9), die mit einer Nockenwelle (16) geöffnet und geschlossen werden;
einen ersten und einen zweiten Auslasskanal (3a, 3b), die mit dem ersten und dem zweiten Auslassventil (8, 9) geöffnet und geschlossen werden;
einen ersten Katalysator (5), der in dem ersten Auslasskanal (3a) angeordnet ist;
einen zweiten Katalysator (6), der in dem zweiten Auslasskanal (3b) so installiert ist, dass er dem ersten Katalysator (5) vorgelagert ist;
einen ersten und einen zweiten variablen Ventilbetätigungsmechanismus (11), wobei der maximale Ventilhub des ersten und des zweiten Auslassventils (8, 9) so eingerichtet ist, dass er zwischen annähernd 0 und einem Maximum stufenlos geändert werden kann; und
eine Ventilhub-Steuereinheit (11a), die so eingerichtet ist, dass sie den maximalen Ventilhub des ersten und des zweiten Auslassventils (8, 9) mit dem ersten und dem zweiten variablen Ventilbetätigungsmechanismus (11) steuert;
wobei der erste und der zweite variable Ventilbetätigungsmechanismus (11) enthalten:
ein erstes und ein zweites Schwenkelement (17), die über eine gemeinsame Drehwelle (20), die parallel zu der Nockenwelle (16) angeordnet ist und von der Nockenwelle (16) drehend angetrieben wird, drehbar gelagert sind;
einen ersten und einen zweiten Kipphebel (18, 18'), die über eine gemeinsame Steuerwelle (23), die parallel zu der Nockenwelle (16) angeordnet ist, schwenkbar gelagert sind, um Öffnen und Schließen des ersten und des zweiten Auslassventils (8, 9) zu bewirken;
einen ersten und einen zweiten Exzenterzapfen (23a, 23b), die an einander über eine axiale Linie (a) der gemeinsamen Steuerwelle (23) gegenüberliegenden Seiten angeordnet sind; sowie
ein erstes und ein zweites Zwischenelement (19, 19'), die zwischen dem ersten und dem zweiten Kipphebel (18, 18') sowie dem ersten und dem zweiten Schwenkelement (17) angeordnet und über den ersten sowie den zweiten Exzenterzapfen (23a, 23b) schwenkbar gelagert sind, um Schwenkbewegung des ersten und des zweiten Schwenkelementes (17) auf den ersten und den zweiten Kipphebel (18, 18') übertragen zu können; und
wobei die Ventilhub-Steuereinheit (11 a) so eingerichtet ist, dass sie eine relative Position des ersten und des zweiten Zwischenelementes (19, 19') in Bezug auf das erste und das zweite Schwenkelement (17) über die gemeinsame Steuerwelle (23) so steuert, dass wenigstens beim Anlassen ein maximaler Ventilhub des ersten Auslassventils (8) annähernd 0 beträgt und ein maximaler Ventilhub des zweiten Auslassventils (9) annähernd ein Maximum erreicht, und dass der maximale Ventilhub des ersten Auslassventils (8) größer wird als der maximale Ventilhub des zweiten Auslassventils (9) und ein maximaler Ventilhub des zweiten Auslassventils (9) in einem Bereich des Betriebs mit hoher Drehzahl und großer Last nach Abschluss eines Warmlauf-Betriebs annähernd 0 beträgt.

2. Motor nach Anspruch 1, wobei die Ventilhub-Steuereinheit (11a) so eingerichtet ist, dass sie den variablen Ventilbetätigungsmechanismus (11) so steuert, dass ein maximaler Ventilhub des ersten Auslassventils (8) zunimmt, wenn ein maximaler Ventilhub des zweiten Auslassventils (9) bei dem Warmlauf-Betrieb im Anschluss an das Anlassen abnimmt, und dass ein Überdeckungsbereich hergestellt werden kann, indem das zweite Auslassventil (9) und das erste Auslassventil (8) zusammen angehoben werden.

3. Motor nach Anspruch 2, wobei in dem Überdeckungsbereich eine wesentliche Fläche der Auslasskanäle (3a, 3b) entweder annähernd konstant bleibt oder aufgrund von Abnahme eines maximalen Ventilhubs des zweiten Auslassventils (9) und Zunahme eines maximalen Ventilhubs des ersten Auslassventils (8) kontinuierlich zunimmt.

4. Motor nach einem der Ansprüche 1 bis 3, wobei sich der zweite Katalysator (6) in einem Zylinderkopf (1) befindet und innerhalb einer zweiten Auslassöffnung (1 k) angeordnet ist, die einen Teil eines zweiten Auslasskanals (3b) bildet.

5. Motor nach Anspruch 5, wobei zwei Auslassventile (8) vorhanden sind und in einer Richtung der Nockenwelle nebeneinander angeordnet sind, und ein zweites Auslassventil (9) vorhanden ist und zwischen den zwei ersten Auslassventilen (8) angeordnet ist und wobei die zweite Auslassöffnung (1 k) so angeordnet ist, dass sie sich zwischen der ersten Auslassöffnung (1i), die einen Teil der ersten Auslasskanäle (3a) bildet, und einer Verbindungsfläche (1 b) an der Seite des Zylinderblocks befindet.

6. Motor nach einem der Ansprüche 1 bis 4, wobei der zweite Katalysator (6) in einer zweiten Abgasleitung (4h) positioniert ist, die mit einer zweiten Auslassöffnung (1 k) eines Zylinderkopfes (1) verbunden ist und einen Teil eines zweiten Auslasskanals (3b) bildet.

## Revendications

1. Moteur comprenant :
une première et une seconde soupapes d'échappement (8, 9) ouvertes et fermées par un arbre à cames (16) ;
un premier et un second passages d'échappement (3a, 3b) ouverts et fermées par la première et la seconde soupapes d'échappement (8, 9) ;
un premier catalyseur (5) disposé dans le premier passage d'échappement (3a) ;
un second catalyseur (6) installé dans le second passage d'échappement (3b) de manière à être situé en amont du premier catalyseur (5) ;
un premier et un second mécanisme de commande variable des soupapes (11), pour lequel les amplitudes de levée maximales des première et seconde soupapes d'échappement (8, 9) sont configurées de manière à être continuellement variables entre approximativement zéro et le maximum ; et
une unité de commande d'amplitude de levée (11a) configurée pour commander des amplitudes de levée maximales des première et seconde soupapes d'échappement (8, 9) par l'intermédiaire des premier et second mécanismes de commande variable des soupapes (11) ;
où les premier et second mécanismes de commande variable des soupapes (11) incluent :
des premier et second organes basculants (17) supportés de manière pivotante par un arbre pivot commun (20) disposé en parallèle avec l'arbre à cames (16) et entraînés en rotation par l'arbre à cames (16) ;
des premier et second culbuteurs (18, 18') supportés de manière pivotante par un arbre de commande commun (23) disposé en parallèle avec l'arbre à cames (16) pour entraîner l'ouverture et la fermeture des première et seconde soupape d'échappement (8, 9) ;
des première et seconde goupilles excentriques (23a, 23b) disposées sur des côtés opposés de part et d'autre d'une ligne axiale (a) de l'arbre de commande commun (23) ; et
des premier et second organes intermédiaires (19, 19') disposés entre les premier et second culbuteurs (18, 18') et les premier et second organes basculants (17) et supportés de manière pivotante par les première et seconde goupilles excentriques (23a, 23b) pour rendre le pivotement des premier et second organes basculants (17) transmissible au premier et second culbuteurs (18, 18') ; et
où l'unité de commande d'amplitude de levée (11a) est configurée pour commander une position relative des premier et second organes intermédiaires (19, 19') par rapport au premier et deuxième organes basculants (17) par l'intermédiaire de l'arbre de commande commun (23) de telle manière qu'une amplitude de levée maximale de la première soupape d'échappement (8) atteint approximativement zéro et une amplitude de levée maximale de la seconde soupape d'échappement (9) atteint approximativement le maximum au moins au démarrage, et que l'amplitude de levée maximale de la première soupape d'échappement (8) devient supérieure à l'amplitude de levée maximale de la seconde soupape d'échappement (9) et une amplitude de levée maximale de la seconde soupape d'échappement (9) atteint approximativement zéro dans une amplitude de la rotation haute vitesse et d'un fonctionnement à charge élevée, après l'achèvement de l'opération de réchauffage.

2. Moteur selon la revendication 1, où l'unité de commande d'amplitude de levée (11a) est configurée pour commander le mécanisme de commande variable des soupapes (11) de telle manière que une amplitude de levée maximale de la première soupape d'échappement (8) augmente à mesure qu'une amplitude de levée maximale de la seconde soupape d'échappement (9) diminue parallèlement à l'opération de réchauffage issue du démarrage et que l'on puisse obtenir une zone de superposition dans laquelle la seconde soupape d'échappement (9) et la première soupape d'échappement (8) se lèvent ensemble.

3. Moteur selon la revendication 2, où, dans la zone de superposition, une zone importante des passages d'échappement (3a, 3b) soit reste approximativement constante ou augmente continuellement en raison d'une diminution dans une amplitude de levée maximale de La seconde soupape d'échappement (9) et d'une augmentation dans l'amplitude de levée maximale de la première soupape d'échappement (8).

4. Moteur selon l'une des revendications 1 à 3, où le second catalyseur (6) est fourni dans une culasse (1) et est disposé dans un second orifice d'échappement (1k), formant ainsi une partie d'un second passage d'échappement (3b).

5. Moteur selon la revendication 5, où deux premières soupapes d'échappement (8) sont fournies et disposées l'une à côté de l'autre dans la direction de l'arbre à cames, où une seconde soupape d'échappement (9) est fournie et disposée entre les deux premières soupapes d'échappement (8), et où le second orifice d'échappement (1k) est disposé de manière à être positionné entre le premier orifice d'échappement (1i), formant ainsi une partie du premier passage d'échappement (4a) et une surface de connexion côté bloc-cylindre (1b).

6. Moteur selon l'une des revendications 1 à 4, où le second catalyseur (6) est placé dans un second tuyau d'échappement (4h), qui est connecté à un second orifice d'échappement (1k) d'une culasse (1) formant ainsi une partie d'un second passage d'échappement (3b).
